# EUROPEAN PATENT SPECIFICATION

(11) **EP 1 404 577 B1**
(45) Date of publication and mention of the grant of the patent: **27.10.2004**
(21) Application number: 02740986.1
(22) Date of filing: 25.06.2002
(51) Int. Cl.: B65B 9/20, B65B 51/30, B65B 65/02

(54) **PACKAGING MACHINE WITH VERTICAL FORMING TUBE**
VERPACKUNGSMASCHINE MIT VERTIKALEM SCHLAUCHFORMER
ENPAQUETEUSE A TUBE VERTICAL DE FORMATION

(30) Priority: 09.07.2001 IT BO20010430
(43) Date of publication of application: 07.04.2004
(73) Proprietor: ICA SPA, 40138 Bologna (IT)
(72) Inventor: RAPPARINI, Gino, I-40138 Bologna (IT)
(74) Representative: Beszédes, Stephan G., Dr.
(86) International application number: PCT/IB2002/002409
(87) International publication number: WO 2003/006317

(56) References cited:
- EP-A- 0 232 220
- EP-A- 0 255 474
- DE-B- 1 124 419
- FR-A- 2 216 177
- US-A- 3 886 714
- US-A- 4 144 693
- US-A- 5 398 486

## Description

The invention refers to the technology of automatic packaging machines, included into the international classification B 65 b.

Several kind of automatic machines to realize packages with flexible thermosealable material are known. Specifically, several packaging machines with vertical forming tube are known, in which the packaging process is made by a device for the longitudinal sealing, a device for the transversal sealing and a device for the realization of side gussets at the bottom and on top of the resulting packages.

Said devices, in the known packaging machines, are controlled by independent motors through special synchronized kinematic motions.

Said triad of actuators devices must be also especially synchronized, implying the employment of complex cinematic articulations that must be fine tuned to obtain perfect packages, specifically at high production speed.

The problem to be solved is to realize a packaging machine set up with a single shaft from which all the main movements, that will thus result automatically synchronized, will be derived.

This problem is solved by the packaging machine according to claim 1.

During intense tests carried at very high rhythm, the solution proposed by the present invention has proved to be extraordinarily versatile and reliable at a operating speed twice as fast than the traditional packing machines.

### DESCRIPTION

The invention is now disclosed with reference to the figures of the attached drawings, as a not restrictive example.

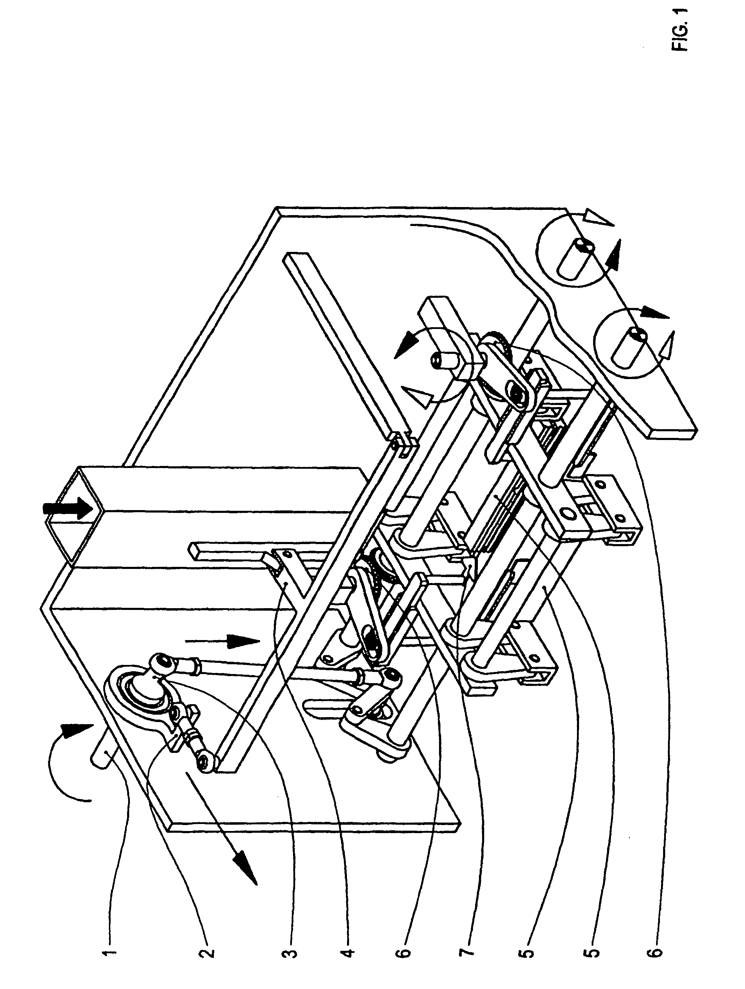

Figure 1 represents schematically an axonometric view of the main operating devices, that are basically three distinct actuators that derive their movement from a single shaft.

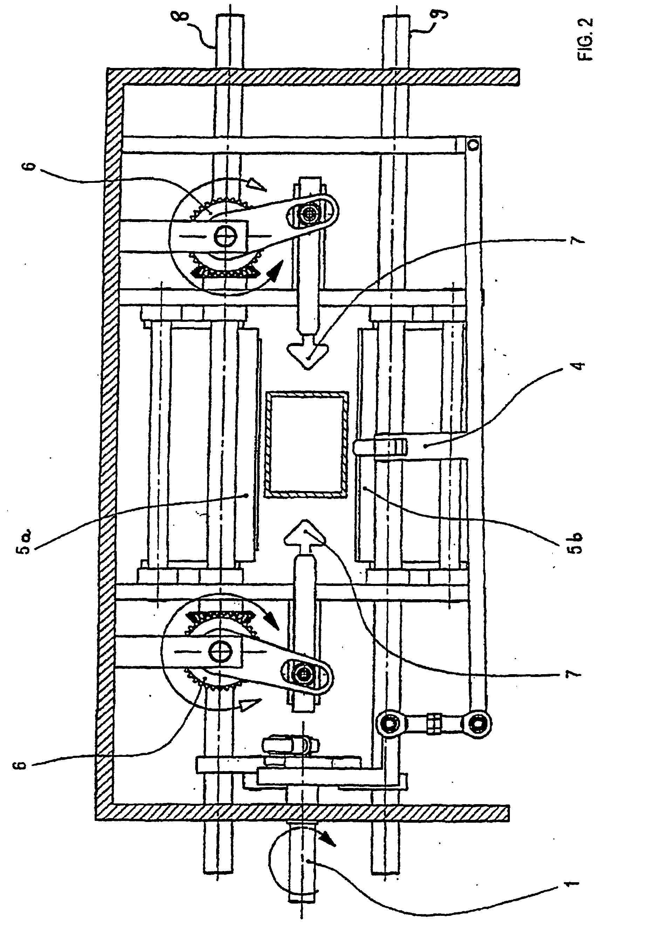

Figure 2 shows schematically the layout of the most relevant kinematic motions.

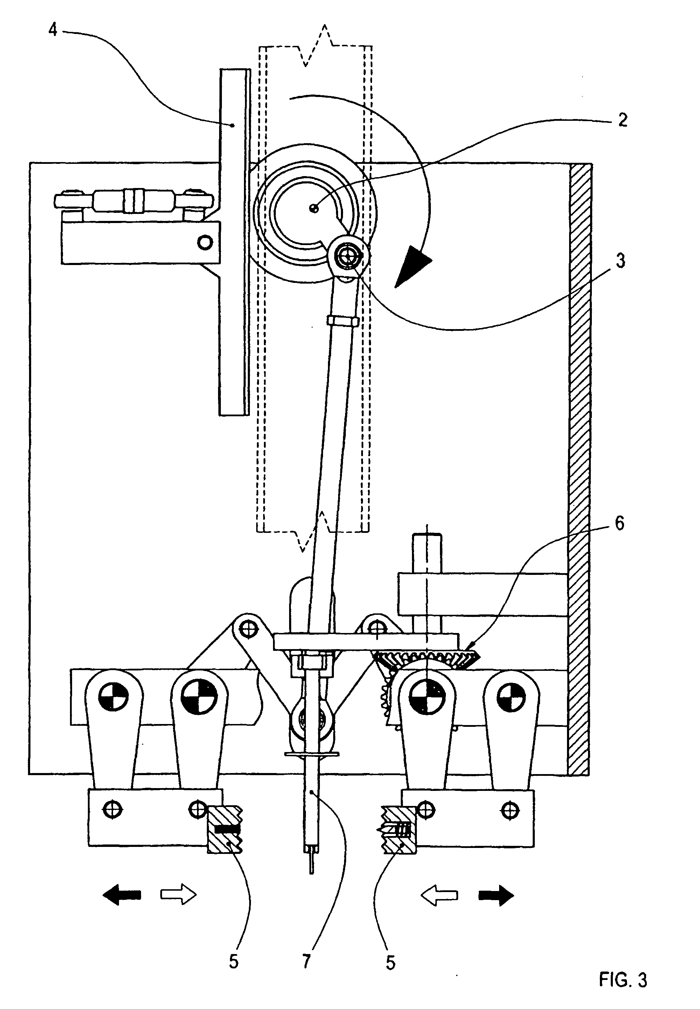

Figure 3 represents schematically a vertical partial section of the most relevant kinematic motions.

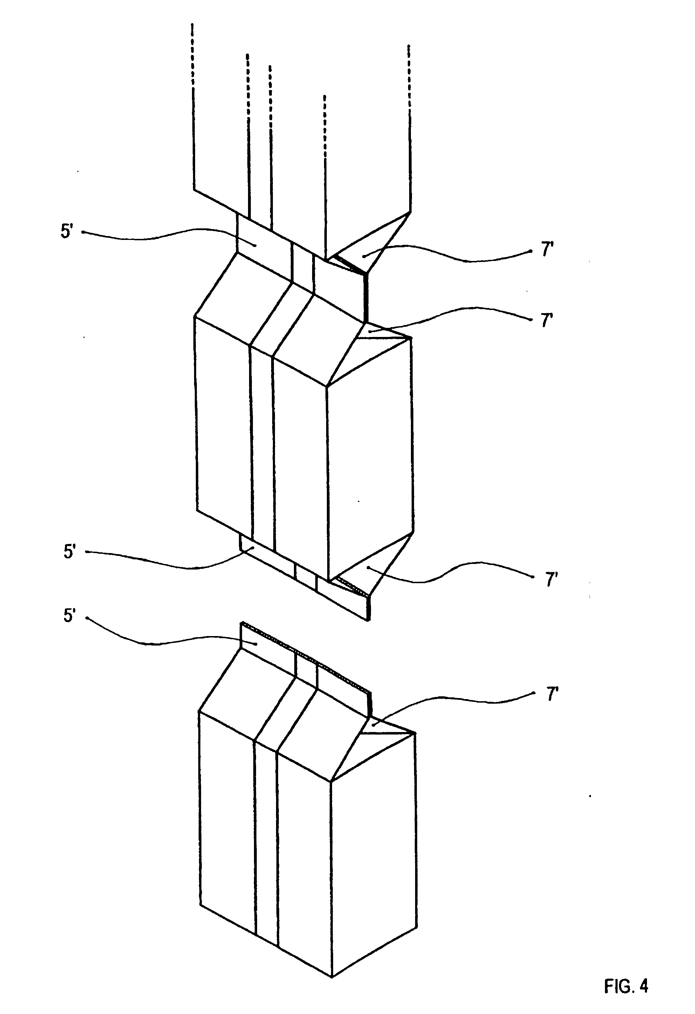

Figure 4 schematizes emblematically a sequence of the resulting packages.

In the figures each single detail is marked as follows:
1 indicates the main shaft.
2 indicates the eccentric that actuates the alternate movement of the device for the vertical sealing.
3 indicates the eccentric that actuates the alternate movement of the device for the vertical sealing.
4 indicates the device for the vertical sealing
5 indicates a pair of opposite jaws for the transversal thermosealing
5' indicates the transversal thermosealing
6 indicates the conical gears that actuate the movement of opposite pushers, whose combined action creates the side gussets at the bottom and at the top of the packaged bag.
7 indicates the opposite side pushers.
7' indicates the resulting side gussets at the bottom and at the top of package.

The evidence of the figures highlights the functional simplicity of the synchronized triad of actuators devices that control the packaging process.

It is clear that the invention allows for several variations of practical realization, as far as the morphological choices and the structural proportioning of the various components, and the technological choices of the material, are concerned.

All those packaging machines with vertical tube that will be realized with a triad of synchronized actuator devices, having the characteristics as basically described, illustrated and hereinafter claimed, will be considered as part of the protection sphere of the present invention.

## Claims

1. Packaging machine with vertical forming tube for forming packages, said machine including a first device for vertical sealing (4), a second device for transversal thermosealing (5), and a first shaft (1) with two eccentrics (2, 3) that obtain an alternate movement of the first device (4) and an alternate movement of the second device (5), and further including a pair of opposite third devices (7) for forming side gussets (7') at the resulting package, **characterized by** conical gears (6) through which the second device causes an alternate movement of the pair of opposite third devices (7) such that a combined action of tne opposite third devices (7) forms the side gussets (7') at the bottom and the top of the resulting package.

2. Packaging machine of claim 1, **characterized in that** the opposite third devices (7) are opposite side pushers.

3. Packaging machine of claim 1 or 2, **characterized by** a second shaft (8) operably connected to a first part (5a) of the second device (5), said second shaft (8) being actuated by one of said eccentrics (3).

4. Packaging machine of claim 3, **characterized in that** the second shaft (8) drives said conical gears (6).

5. Packaging machine of claim 4, **characterized by** a third shaft (9) operably connected to a second part (5b) of the second device (5), wherein the third shaft (9) does not drive said conical gears (6).

## Patentansprüche

1. Verpackungsmaschine mit vertikalem Formungsrohr zum Formen von Verpackungen, wobei die Maschine umfasst: eine erste Vorrichtung zum vertikalen Verschließen (4), eine zweite Vorrichtung zum Thermoverschließen in Querrichtung (5) und eine erste Welle (1) mit zwei Exzentern (2, 3), die eine periodische Bewegung von der ersten Vorrichtung (4) und eine periodische Bewegung von der zweiten Vorrichtung (5) erhalten, und die ferner umfasst: ein Paar gegenüberliegender dritter Vorrichtungen (7) zum Formen von Seitenfalten (7') an der resultierenden Verpackung, **gekennzeichnet durch** Kegelzahnräder (6), **durch** welche die zweite Vorrichtung eine periodische Bewegung des Paares gegenüberliegender dritter Vorrichtungen (7) derart bewirkt, dass eine kombinierte Wirkung der gegenüberliegenden dritten Vorrichtungen (7) die Seitenfalten (7') an der Unterseite und der Oberseite der resultierenden Verpackung formt.

2. Verpackungsmaschine nach Anspruch 1, **dadurch gekennzeichnet, dass** die gegenüberliegenden dritten Vorrichtungen (7) gegenüberliegende Seitenschieber sind.

3. Verpackungsmaschine nach Anspruch 1 oder 2, **gekennzeichnet durch** eine zweite Welle (8), die mit einem ersten Teil (5a) von der zweiten Vorrichtung (5) wirksam verbunden ist, wobei die zweite Welle (8) **durch** einen von den Exzentern (3) betätigt wird.

4. Verpackungsmaschine nach Anspruch 3, **dadurch gekennzeichnet, dass** die zweite Welle (8) die Kegelzahnräder (6) antreibt.

5. Verpackungsmaschine nach Anspruch 4, **gekennzeichnet durch** eine dritte Welle (9), die mit einem zweiten Teil (5b) von der zweiten Vorrichtung (5) wirksam verbunden ist, wobei die dritte Welle (8) die Kegelzahnräder (6) nicht antreibt.

## Revendications

1. Machine d'emballages avec un tube de façonnage vertical pour façonner des emballages, ladite machine comprenant un premier dispositif pour le scellage vertical (4), un deuxième dispositif pour le scellage à chaud dans le sens transversal (5) et un premier arbre (1) avec deux excentriques (2,3) qui obtiennent un mouvement périodique du premier dispositif (4) et un mouvement périodique du deuxième dispositif (5), et comprenant en outre une paire de troisièmes dispositifs se faisant face (7) pour le façonnage de soufflets latéraux (7') sur l'emballage résultant, **caractérisée par** des roues dentées coniques (6) par le biais desquelles le deuxième dispositif provoque un mouvement périodique de la paire de troisièmes dispositifs se faisant face (7) de telle sorte qu'une action combinée des troisièmes dispositifs se faisant face (7) forme les soufflets latéraux (7') au niveau du côté inférieur et du côté supérieur de l'emballage résultant.

2. Machine d'emballages selon la revendication 1, **caractérisée en ce que** les troisièmes dispositifs se faisant face (7) sont des coulisses latérales se faisant face.

3. Machine d'emballages selon la revendication 1 ou 2, **caractérisée par** un deuxième arbre (8) activement relié à une première partie (5a) du deuxième dispositif (5), ledit deuxième arbre (8) étant actionné par l'une desdites excentriques (3).

4. Machine d'emballages selon la revendication 3, **caractérisée en ce que** ledit deuxième arbre (8) entraîne lesdites roues dentées coniques (6).

5. Machine d'emballages selon la revendication 4, **caractérisée par** un troisième arbre (9) activement relié à une seconde partie (5b) du deuxième dispositif (5), ledit troisième arbre (9) n'entraînant pas lesdites roues dentées coniques (6).
